# EUROPÄISCHE PATENTANMELDUNG

(11) **EP 2 669 121 A1**
(43) Veröffentlichungstag der Anmeldung: **04.12.2013**
(21) Anmeldenummer: 13169480.4
(22) Anmeldetag: 28.05.2013
(51) Int. Cl.: B60R 19/02, B60R 19/48

(54) **Karosseriebauteil und Verfahren zum Herstellen eines solchen**

(30) Priorität: 30.05.2012 DE 102012010631
(71) Anmelder: Faurecia Exteriors GmbH, 31655 Stadthagen (DE)
(72) Erfinder: Kurek, Gerhard, 91781 Weißenburg (DE); Conze, Michael, 85416 Langenbach (DE)
(74) Vertreter: Tischner, Oliver

(57) **Zusammenfassung**

Die Erfindung betrifft ein Karosseriebauteil (1) für ein Fahrzeug, umfassend ein Trägerbauteil (2) und eine erste Blende (3), wobei die erste Blende (3) an dem Trägerbauteil (2) montierbar ist, und das Trägerbauteil (2) zumindest einen vorläufigen Montagebereich (4) und zumindest einen endgültigen Montagebereich (5) aufweist, an denen die erste Blende (3) montierbar ist.

## Beschreibung

Die vorliegende Erfindung betrifft ein Karosseriebauteil für ein Fahrzeug sowie ein Verfahren zum Herstellen eines Karosseriebauteils. Bei modernen Fahrzeugen ist es aus optischen Gründen beispielweise wichtig, dass die Stoßfängerverkleidungen dieselbe Farbe aufweisen, in der auch die Fahrzeugkarosserie lackiert ist. Dabei muss der Farbverlauf über die gesamte Stoßfängerverkleidung homogen sein, was insbesondere auch für nachträglich eingeclipste Teile gilt. So ist es beispielsweise oftmals vorgesehen, dass eine vorhandene Abschleppöse des Fahrzeugs durch eine Blende abgedeckt ist, die bei Bedarf entfernt werden kann. Gerade eine solche Blende muss jedoch die exakt gleiche Farbe, wie die umgebende Stoßfängerverkleidung aufweisen, da ansonsten eine Akzeptanz beim Kunden nicht gewährleistet werden kann.

Aus dem Stand der Technik ist beispielsweise die DE 102 03 416 B4 bekannt, die einen Deckel zum Verschließen einer Öffnung offenbart. Dabei handelt es sich gemäß der Druckschrift insbesondere um einen lackierten Deckel, der in eine lackierte Stoßfängerverkleidung eingebracht wird. Um beim Einfügen und Entfernen des Deckels weder die Lackschicht des Deckels noch die Lackschicht der Verkleidung zu beschädigen, ist ein Mechanismus aus Rasten und Verkippungsmöglichkeiten vorgesehen, über den der Deckel entfernt und eingesetzt werden kann.

Ein weiterer Deckel ist aus der DE 103 40 154 A1 bekannt. Auch dieser Deckel wird bevorzugt in einer Stoßfängerverkleidung verwendet. Dabei besteht der Deckel aus zwei Schichten, wobei die innere Schicht vorwiegend für die Verankerung des Deckels und die äußere Schicht vorwiegend für ein ästhetisch hochwertiges Aussehen verantwortlich ist.

Beide Druckschriften zeigen die Bemühungen auf, die unternommen werden, um dem Verbraucher eine optisch hochwertige und ästhetisch ansprechende Stoßfängerverkleidung zu bieten. Um dies weiter zu verbessern, ist aus der DE 10 2007 051 763 A1 ein Verfahren bekannt, mit dem ein Kunststoffteil mit einer Beschichtung versehen werden kann. Bevorzugt handelt es sich bei dieser Beschichtung um einen Lack, der mit dem beschriebenen Verfahren derart auf das Kunststoffteil aufgebracht werden soll, so dass eine optisch hochwertige Oberfläche entsteht.

Schließlich ist aus der DE 20 2004 011 949 U1 eine Vorrichtung bekannt, mit der insbesondere Stoßfängerverkleidung zum Zweck der Lackierung gehalten werden können. Dabei erlaubt die Vorrichtung, einer Verformung des zu lackierenden Bauteils durch Auftrag temperierter Farbe entgegenzuwirken und eine gute Zugänglichkeit zu allen Bereichen des Bauteils sicherzustellen.

Es hat sich jedoch gezeigt, dass unerwünschte Farbabweichungen zwischen der Verkleidung und dem Deckel nur dann vermieden werden können, wenn beide gleichzeitig lackiert werden. Jedoch wird im Temperaturdurchlauf vom Lackierprozess die Verrastung Deckel zu Verkleidung lose, so dass es nach dem Lackieren zur verminderten Haltequalität und zum Wackeln oder Klappern des Deckels führt.

Es ist daher Aufgabe der Erfindung, die genannten Nachteile des Standes der Technik zu vermeiden und insbesondere ein Karosseriebauteil bereitzustellen, in das eine Blende eingesetzt werden kann, wobei eine optisch hochwertige Verbindung entsteht.

Die Aufgabe wird gelöst durch die Merkmale des unabhängigen Anspruchs 1. Dieser offenbart ein Karosseriebauteil für ein Fahrzeug, das ein Trägerbauteil und eine erste Blende umfasst. Erfindungsgemäß ist dabei vorgesehen, dass die erste Blende an dem Trägerbauteil montierbar ist. Insbesondere ist die erste Blende fest an dem Trägerbauteil montierbar, so dass sie nicht wackeln oder klappern kann. Das Trägerbauteil weist daher erfindungsgemäß einen endgültigen Montagebereich auf, der bevorzugt aus Gegenstück zu der ersten Blende ausgestaltet ist, so dass die erste Blende beispielsweise an dem endgültigen Montagebereich einclipsbar ist. Weiterhin ist erfindungsgemäß vorgesehen, dass das Trägerbauteil einen vorläufigen Montagebereich aufweist, der ebenso wie der endgültige Montagebereich ausgestaltet ist, die erste Blende aufzunehmen. Bevorzugt liegt der vorläufige Montagebereich dabei räumlich nahe an dem endgültigen Montagebereich. Somit kann die erste Blende erfindungsgemäß an mindestens zwei Bereichen des Trägerbauteils montiert werden, was ein Lackieren von Trägerbauteil und erster Blende gemeinsam ermöglicht, wenn die erste Blende in dem vorläufigen Montagebereich des Trägerbauteils montiert ist. Gleichzeitig wird jedoch bei einem späteren Ausbau der ersten Blende lediglich der vorläufige Montagebereich vorgeschädigt und nicht der endgültige Montagebereich. Somit bleibt die hohe Qualität des finalen Einbaus der ersten Blende in das Trägerbauteil erhalten. Durch die räumliche Nähe von vorläufigem Montagbereich und endgültigem Montagebereich ist weiterhin sichergestellt, dass keine Lackübergänge zwischen der ersten Blende und dem Trägerbauteil sichtbar sind.

Die Unteransprüche haben bevorzugte Weiterbildungen der Erfindung zum Inhalt.

In einer bevorzugten Ausführungsform ist der vorläufige Montagebereich von einer zweiten Blende verdeckbar. Dies bedeutet, dass der vorläufige Montagebereich an einem Ort an dem Trägerbauteil angebracht ist, der in einem späteren Verarbeitungsschritt des Karosseriebauteils von einer zweiten Blende abgedeckt wird. Die zweite Blende kann dabei entweder ästhetischen oder funktionellen Charakter aufweisen. Erfindungsgemäß ist lediglich vorgesehen, dass die zweite Blende eine größere Abmessung als die erste Blende aufweist. Somit wird der vorläufige Montagebereich großflächig abgedeckt, wobei eine eventuelle Vorschädigung des vorläufigen Montagebereichs durch einen Ein- und Wiederausbau der ersten Blende keine Rolle mehr spielt.

Um sicherzustellen, dass lediglich der vorläufige Montagebereich bei einem Ein- und Wiederausbau der ersten Blende geschädigt wird, ist erfindungsgemäß bevorzugt vorgesehen, dass die erste Blende eine höhere Festigkeit aufweist als das Trägerbauteil. Beispielsweise kann die erste Blende ein festeres Material als das Trägerbauteil aufweisen oder es können unterschiedliche Materialstärken für die erste Blende und das Trägerbauteil verwendet werden. Insgesamt wird somit erfindungsgemäß sichergestellt, dass sämtliche Schädigungen lediglich an dem Trägerbauteil stattfinden, so dass die erste Blende auch nach mehrmaliger Verwendung bei Einbau in einen unbenutzten Montagebereich stets eine hohe Verbindungsqualität aufweist.

In einer vorteilhaften Ausführungsform der Erfindung ist das Karosseriebauteil eine Verkleidung für einen Stoßfänger des Fahrzeugs.

Weiterhin ist bevorzugt vorgesehen, dass die erste Blende eine Öffnung des Fahrzeugs verdeckt. Insbesondere ist vorgesehen, dass die erste Blende eine Öffnung für eine Abschleppöse des Fahrzeugs verdeckt. Dies bedeutet, dass der endgültige Montagebereich des Trägerbauteils bevorzugt eine Öffnung umfasst, über die ein Zugriff auf besagte Abschleppöse möglich ist. Zum Schutz der Abschleppöse vor äußeren Einflüssen und zum Erzeugen eines optisch ansprechenden Designs wird diese Öffnung von der ersten Blende abgedeckt. Dabei ist insbesondere vorgesehen, dass die erste Blende derart an dem Trägerbauteil angebracht wird, dass diese sich optisch kaum von dem Trägerbauteil selbst unterscheidet.

Die Erfindung betrifft weiterhin ein Verfahren zum Herstellen eines Karosseriebauteils. Dieses Verfahren umfasst die folgenden Schritte: Zunächst wird ein Trägerbauteil und eine erste Blende bereitgestellt. Bevorzugt sind diese beiden Elemente aus einem Kunststoff gefertigt. Anschließend wird zumindest ein sowohl vorläufiger als auch endgültiger Montagebereich an dem Trägerbauteil angebracht, wobei die beiden Montagebereiche derart ausgestaltet sind, dass an diesen die erste Blende montierbar ist. Beispielsweise kann es sich bei den Montagebereichen um Öffnungen handeln, in die die erste Blende eingeclipst werden kann. Im nächsten Schritt wird die erste Blende in dem vorläufigen Montagebereich des Trägerbauteils montiert, so dass Trägerbauteil und erste Blende miteinander verbunden sind. Anschließend wird dieser Verbund lackiert, so dass der exakt gleiche Farbton auf das Trägerbauteil und die erste Blende aufgebracht wird. Sobald der Lack ausgehärtet ist, kann die erste Blende wieder entfernt werden, so dass Trägerbauteil und erste Blende für die weiteren Verarbeitungsschritte getrennt voneinander zur Verfügung stehen. Abschließend wird die erste Blende in dem endgültigen Montagebereich des Trägerbauteils montiert, so dass eine finale Verbindung zwischen erster Blende und Trägerbauteil etabliert wird. Da der endgültige Montagebereich bisher nicht verwendet wurde, wird eine qualitativ hochwertige Verbindung hergestellt. Somit ermöglicht das erfindungsgemäße Verfahren, ein Karosseriebauteil herzustellen, bei dem eine Blende in exakt der gleichen Farbe wie das umgebende Trägerbauteil vorhanden ist, um höchsten ästhetischen Ansprüchen gerecht zu werden. Zusätzlich ist die Verbindung zwischen der Blende und dem Trägerbauteils hochwertig ausgestaltet, so dass kein Wackeln oder Klappern der Blende auftritt.

In einer bevorzugten Ausführungsform wird das erfindungsgemäße Verfahren durchgeführt, indem zusätzlich eine zweite Blende an dem Trägerbauteil montiert wird. Erfindungsgemäß weist die zweite Blende Abmessungen auf, die größer als die Abmessungen der ersten Blende sind. Ebenso wird die zweite Blende erfindungsgemäß an einem Bereich des Trägerbauteils montiert, an dem die zweite Blende den vorläufigen Montagebereich vollständig verdeckt. Da das Entfernen der ersten Blende aus dem vorläufigen Montagebereich, wie es in dem erfindungsgemäßen Verfahren vorgesehen ist, zwangsläufig zu einer Schädigung des vorläufigen Montagebereichs führt, dient die zweite Blende zum Abdecken dieses geschädigten Bereichs. Damit trägt auch die zweite Blende zum qualitativ hochwertigen optischen Aussehen des Karosseriebauteils bei.

Das erfindungsgemäße Verfahren wird in einer vorteilhaften Weise durchgeführt, indem das Trägerbauteil als Verkleidung für einen Stoßfänger eines Fahrzeugs verwendet wird.

Weiterhin ist bevorzugt vorgesehen, dass in den endgültigen Montagebereich des Trägerbauteils eine Öffnung eingebracht wird. Diese Erfindung kann anschließend durch das Montieren der ersten Blende wieder verdeckt werden. Jedoch ist erfindungsgemäß vorgesehen, dass durch das Einbringen der Öffnung ein Zugriff auf eine Abschleppöse des Fahrzeugs ermöglicht wird. Somit dient die erste Blende zum Abdecken dieser Abschleppöse, um diese einerseits vor äußeren Einflüssen zu schützen, andererseits um eine ansprechendes äußeres Erscheinungsbild des Karosseriebauteils zu ermöglichen.

Weitere Einzelheiten, Merkmale und Vorteile der Erfindung ergeben sich aus der nachfolgenden Beschreibung und der Figur. Es zeigt:

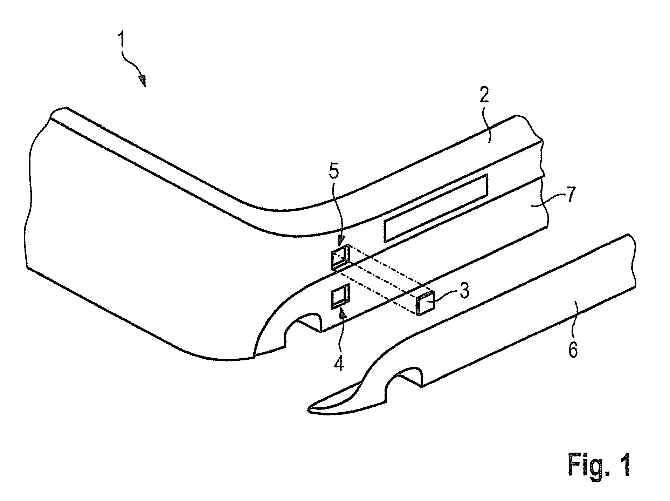

- Figur 1: eine Explosionszeichnung des erfindungsgemäßen Karosseriebauteils in einer bevorzugten Ausführungsform.

In Figur 1 ist ein Karosseriebauteil 1 gemäß einer bevorzugten Ausführungsform der Erfindung schematisch dargestellt. Das Karosseriebauteil 1 umfasst dabei ein Trägerbauteil 2, das als Stoßfängerverkleidung ausgebildet ist. An dem Trägerbauteil 2 sind insgesamt drei verschiedene Montagebereiche angebracht. Ein vorläufiger Montagebereich 4 kann eine erste Blende 3 aufnehmen, ebenso wie ein endgültiger Montagebereich 5. An einem zusätzlichen Montagebereich 7 kann eine zweite Blende befestigt werden.

Für die erste Blende 3 sind daher zwei Montagepositionen vorhanden. Die endgültige Montageposition 5 entspricht dabei der Position, in der die erste Blende 3 final angebracht ist. Der endgültige Montagebereich 5 ist als Öffnung ausgebildet, wobei die Öffnung von der ersten Blende 3 abgedeckt wird. Die Öffnung erlaubt dabei einen Zugriff auf eine in der Zeichnung nicht dargestellte Abschleppöse eines Fahrzeugs, an dem das Trägerbauteil 2 als Stoßfängerverkleidung angebracht ist. Die erste Blende 3 kann außerdem in dem vorläufigen Montagebereich 4 montiert werden. Dies hat den Vorteil, dass das Trägerbauteil 2 und die erste Blende 3 gleichzeitig lackiert werden können, ohne dass bei einem erneuten Ausbau der ersten Blende 3 der endgültige Montagebereich 5 beschädigt würde. Um Lackabweichungen zu vermeiden, ist der vorläufige Montagebereich 4 räumlich nahe an dem endgültigen Montagebereich 5 angeordnet. Sobald das Trägerbauteil 2 und die erste Blende 3 lackiert sind und das Trägerbauteil 2 final an dem Fahrzeug montiert ist, kann die erste Blende 3 an dem endgültigen Montagebereich 5 montiert werden. Dieser wurde bis dahin nicht verwendet, so dass eine qualitativ hochwertige Verbindung zwischen erster Blende 3 und Trägerbauteil 2 entsteht. Insbesondere entsteht diese Verbindung durch einen Clips- oder Klemmmechanismus.

Der durch den Ein- und Wiederausbau der ersten Blende 3 vorgeschädigte vorläufige Montagebereich 4 ist innerhalb des zusätzlichen Montagebereichs 7 angeordnet. Die zweite Blende 6 ist dafür vorgesehen, an dem zusätzlichen Montagebereich 7 befestigt zu werden, so dass diese aufgrund ihrer größeren Abmessungen den vorläufigen Montagebereich 4 vollständig verdeckt. Die bereits erfolgte Schädigung des vorläufigen Montagebereichs 4 ist somit für den Betrachter nicht mehr zu erkennen. Insgesamt entsteht jedoch ein hochwertiges Karosseriebauteil 1, das höchsten optischen Anforderungen genügt, da ein Übergang zwischen dem Trägerbauteil 2 und der ersten Blende 3 nur geringfügig sichtbar ist.

**Bezugszeichenliste:**

| | |
|---|---|
| 1 | Karosseriebauteil |
| 2 | Trägerbauteil |
| 3 | Erste Blende |
| 4 | Vorläufiger Montagebereich |
| 5 | Endgültiger Montagebereich |
| 6 | Zweite Blende |
| 7 | Zusätzlicher Montagebereich |

## Patentansprüche

1. Karosseriebauteil (1) für ein Fahrzeug, umfassend ein Trägerbauteil (2) und eine erste Blende (3),
- wobei die erste Blende (3) an dem Trägerbauteil (2) montierbar ist, und
- das Trägerbauteil (2) zumindest einen vorläufigen Montagebereich (4) und zumindest einen endgültigen Montagebereich (5) aufweist, an denen die erste Blende (3) montierbar ist.

2. Karosseriebauteil nach Anspruch 1, wobei der vorläufige Montagebereich (4) von einer zweiten Blende (6) verdeckbar ist, wobei die zweite Blende (6) eine größere Abmessung als die erste Blende (3) aufweist.

3. Karosseriebauteil nach einem der vorhergehenden Ansprüche, wobei die erste Blende (3) eine höhere Festigkeit aufweist als das Trägerbauteil (2).

4. Karosseriebauteil nach einem der vorhergehenden Ansprüche, wobei das Trägerbauteil (2) eine Verkleidung für einen Stoßfänger des Fahrzeugs ist.

5. Karosseriebauteil nach einem der vorhergehenden Ansprüche, wobei die erste Blende (3) eine Öffnung, bevorzugt eine Öffnung für eine Abschleppöse des Fahrzeugs, verdeckt.

6. Verfahren zum Herstellen eines lackierten Karosseriebauteils, umfassend die Schritte:
- Bereitstellen eines Trägerbauteils (2) und einer ersten Blende (3),
- Anbringen eines vorläufigen Montagebereichs (4) und eines endgültigen Montagebereichs (5) an dem Trägerbauteil (2), in denen die erste Blende (3) montierbar ist,
- Montieren der ersten Blende (3) in dem vorläufigen Montagebereich (4) des Trägerbauteils (2),
- Lackieren des Trägerbauteils (2) zusammen mit der montierten ersten Blende (3),
- Entfernen der ersten Blende (3) aus dem vorläufigen Montagebereich (4), und
- Montieren der ersten Blende (3) in dem endgültigen Montagebereich (5) des Trägerbauteils (2).

7. Verfahren nach Anspruch 6, umfassend:
- Montieren einer zweiten Blende (6) an dem Trägerbauteil (2), wobei die zweite Blende (6) eine größere Abmessung als die erste Blende (3) aufweist und den vorläufigen Montagebereich (4) verdeckt.

8. Verfahren nach einem der Ansprüche 6 bis 7, wobei das Trägerbauteil (2) als Verkleidung für einen Stoßfänger eines Fahrzeugs verwendet wird.

9. Verfahren nach einem der Ansprüche 6 bis 8, wobei in den endgültigen Montagebereich (5) des Trägerbauteils (2) eine Öffnung eingebracht wird, durch die ein Zugriff auf eine Abschleppöse des Fahrzeugs ermöglicht wird.
